(19) Europäisches Patentamt
European Patent Office
Office européen des brevets

(11) **EP 3 239 548 A1**

(12) **EUROPÄISCHE PATENTANMELDUNG**

(43) Veröffentlichungstag:
**01.11.2017 Patentblatt 2017/44**

(51) Int Cl.:
***F16D 1/033*** *(2006.01)*     *F16B 19/02* *(2006.01)*

(21) Anmeldenummer: **17166736.3**

(22) Anmeldetag: **18.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **26.04.2016 DE 102016005019**

(71) Anmelder: **Senvion GmbH**
**22297 Hamburg (DE)**

(72) Erfinder: **Eusterbarkey, Carsten**
**25813 Simonsberg (DE)**

(74) Vertreter: **Glawe, Delfs, Moll**
**Partnerschaft mbB**
**von Patent- und Rechtsanwälten**
**Postfach 13 03 91**
**20103 Hamburg (DE)**

(54) **SCHRAUBVERBINDUNG**

(57)     Die Erfindung betrifft eine Schraubverbindung (1) sowie ein Verfahren zur Herstellung einer Schraubverbindung (1), insbesondere für eine Flanschkupplung (20) an der Rotorwelle (21) einer Windenergieanlage.

Die Schraubverbindung (1) umfasst ein durch ein Durchgangsloch (3) eines Bauteils (2) hindurchgeführte Schraube (4), wobei die Schraubverbindung (1) mit einem das Anzugsdrehmoment größer als 80% des maximalen Anzugmoments der Schraube (4) hergestellt ist. Weiterhin ist eine Kragenhülse (10) derart in das Durchgangsloch (3) eingeführt, dass der Kragen (11) der Kragenhülse (10) zwischen dem an dem Bauteil (2) angreifenden Anschlag (6) der Schraubverbindung (1) und dem Bauteil (2) angeordnet ist und der Hülsenabschnitt (12) der Kragenhülse (10) im Wesentlichen ohne Spiel sowohl gegenüber dem Durchgangsloch (3) als auch gegenüber dem durch den Hülsenbereich (12) geführten Schaft der Schraube (4) ist.

Das Verfahren zum Herstellen einer erfindungsgemäßen Schraubverbindung umfasst die Schritte:
a. Einführen der Kragenhülse (10) in die Durchgangsbohrung (3) eines Bauteils (2);
b. Durchführen der Schraube (4) durch die Kragenhülse (10); und
c. Anziehen der Schraubverbindung (1) mit einem Anzugdrehmoment von wenigstens 80% des maximalen Anzugmoments der Schraube (4).

Fig. 1

**Beschreibung**

Die Erfindung betrifft eine Schraubverbindung sowie ein Verfahren zur Herstellung einer Schraubverbindung, insbesondere für eine Flanschkupplung an der Rotorwelle einer Windenergieanlage.

Bei Schraubverbindungen zur Verbindung zweier Bauteile wird eine Schraube entweder durch eine Durchgangsbohrung in einem ersten Bauteil geführt und greift in ein Gewinde im zweiten Bauteil ein, oder aber eine Schraube wird durch jeweils eine Durchgangsbohrung in beiden Bauteilen geführt, wobei die Verbindung dann mithilfe einer gesonderten Schraubenmutter hergestellt wird (Durchsteck-Schraubverbindung). Durch Anziehen der Schraubverbindungen werden diese fest.

Je nachdem welche Beanspruchungen auf eine Schraubverbindung zu erwarten sind, ist das Moment, mit dem die Schraubverbindung angezogen werden muss, zu wählen. Das Anzugdrehmoment bestimmt dabei zunächst die Vorspannung der Schraubverbindung, die u.a. eine elastische Verformung der Schraube zur Folge hat. Wird die Schraubverbindung über denjenigen Bereich, in dem sich die Schraube der Schraubverbindung ausschließlich elastisch verformt, hinaus in den sogenannten plastischen Bereich angezogen, können mögliche Störgrößen auf das Verhältnis von Anzugdrehmoment und der tatsächlich vorliegenden Vorspannkraft einer Schraubverbindung, wie bspw. Einflüsse der Gewindereibung, stark verringert werden, womit die tatsächliche Vorspannkraft einer Schraubverbindung genauer vorhersagbar ist.

Insbesondere bei Verbindungen zweier Bauteile mit einer Vielzahl von Schraubverbindungen, bei denen es erforderlich ist, dass die Vorspannungen der einzelnen Schraubverbindungen möglichst gleich sind, ist ein Anziehen der einzelnen Schraubverbindungen bis in den plastischen Bereich vorteilhaft. Ein Beispiel einer entsprechenden Verbindung zweier Bauteile ist die Flanschkupplung an der Rotorwelle einer Windenergieanlage, bspw. zwischen Welle und Nabe oder zwischen Welle und Generator.

Das Anziehen einer Schraubverbindung in den plastischen Bereich bietet darüber hinaus den Vorteil, dass ein Nachziehen der Schraubverbindung grundsätzlich nicht erforderlich ist. Beim Anziehen einer Schraubverbindung in den plastischen Bereich treten aufgrund der dafür regelmäßig erforderlichen sehr hohen Anzugdrehmomente häufig Biegebeanspruchungen auf, die in einer unsymmetrischen plastischen Verformung resultieren können, welche wiederum die Festigkeit der Schraubverbindung reduzieren können.

Auch beim Anziehen einer Schraubverbindung mit hohen Anzugdrehmomenten, bei denen grundsätzlich keine plastische Verformung gewünscht ist und die Schraubverbindung folglich nicht in den plastischen Bereich angezogen wird, können aufgrund der dabei auftretenden Biegebeanspruchungen dennoch unerwünschte plastische Verformungen auftreten. Dies ist dann der Fall, wenn die aus der Vorspannung und der Biegebeanspruchung lokal ergebenden Spannungsspitzen oberhalb der Streckgrenze des Materials der Schraube der Schraubverbindung liegt.

Um die Biegebeanspruchung von Schraubverbindungen beim Anziehen mit hohen Anziehdrehmomenten zu minimieren, ist aus dem Stand der Technik bekannt, über den Einsatz von verdrehsicheren Unterlegscheiben in Kombination mit an den Unterlegscheiben unmittelbar angreifenden Werkzeugen zum Anziehen der Schraubverbindung Biegebeanspruchungen der Schraube zu vermeiden. Nachteilig an diesem Stand der Technik ist, dass die verdrehsicheren Unterlegscheiben aufwendig und damit kostenintensiv in der Herstellung sind. Außerdem sind für die Herstellung entsprechender Schraubverbindungen grundsätzlich Spezialwerkzeuge erforderlich.

Aufgabe der vorliegenden Erfindung ist es, eine Schraubverbindung sowie ein Verfahren zur Herstellung einer Schraubverbindung zu schaffen, bei denen die Nachteile aus dem Stand der Technik nicht mehr oder nur noch in vermindertem Umfang auftreten.

Gelöst wird diese Aufgabe durch eine Schraubverbindung gemäß dem Hauptanspruch sowie ein Verfahren gemäß dem nebengeordneten Anspruch 7. Vorteilhafte Weiterbildungen sind Gegenstand der abhängigen Ansprüche.

Demnach betrifft die Erfindung eine Schraubverbindung mit einer durch ein Durchgangsloch eines Bauteils hindurchgeführten Schraube, wobei die Schraubverbindung mit einem das Anzugsdrehmoment größer als 80% des maximalen Anzugmoments der Schraube hergestellt ist, und wobei eine Kragenhülse derart in das Durchgangsloch eingeführt ist, dass der Kragen der Kragenhülse zwischen dem an dem Bauteil angreifenden Anschlag der Schraubverbindung und dem Bauteil angeordnet ist und der Hülsenabschnitt der Kragenhülse im Wesentlichen ohne Spiel sowohl gegenüber dem Durchgangsloch als auch gegenüber dem durch den Hülsenbereich geführten Schaft der Schraube ist.

Weiterhin betrifft die Erfindung Verfahren zum Herstellen einer erfindungsgemäßen Schraubverbindung, mit den Schritten:

a. Einführen der Kragenhülse in die Durchgangsbohrung eines Bauteils;

b. Durchführen der Schraube durch die Kragenhülse; und

c. Anziehen der Schraubverbindung mit einem Anzugdrehmoment von wenigstens 80% des maximalen Anzugmoments der Schraube.

Zunächst werden einige im Rahmen der Erfindung verwendete Begriffe erläutert.

Ein erstes Bauteil, welches in ein zweites Bauteile eingeführt ist, gilt gegenüber dem zweiten Bauteil als "im Wesentlichen ohne Spiel", wenn sich das erste Bauteil gegenüber dem zweiten Bauteil abgesehen von der Einführungsrichtung nicht oder nur minimal bewegen lässt.

Der "an einem Bauteil angreifende Anschlag einer Schraubverbindung" ist derjenige Bereich, mit dem die Vorspannung der Schraubverbindung in das Bauteil eingeleitet wird. Der Anschlag kann also insbesondere durch einen Schraubenkopf oder eine Mutter gebildet werden.

Mit dem "maximalen Anzugmoment" ist dasjenige Anzugdrehmoment bezeichnet, mit dem sich für eine Schraube vorgesehene maximale Vorspannkraft erreichen lässt. Das maximale Anzugmoment ist dabei u. a. abhängig von dem Schraubendurchmesser, der Ausgestaltung des Gewindes (insb. Regel- oder Feingewinde), der Reibungszahl sowie der Festigkeitsklasse der Schraube. Bei Normschrauben sind in der Regel auch die maximalen Anzugmomente normiert; für nicht-normierte Schrauben lassen sich die maximalen Anzugmomente durch im Stand der Technik bekannte Verfahren ermitteln.

Bei der erfindungsgemäßen Schraubverbindung wird die Schraube durch die erfindungsgemäß vorgesehene Kragenhülse in dem Bereich eines Anschlags der Schraubverbindung, in dem regelmäßig auch ein Werkzeug zum Anziehen der Schraubverbindung angesetzt wird, weitestgehend spielfrei geführt. In der Folge können durch das Werkzeug während des Anziehens in die Schraube eingebrachte Querkräfte abgeleitet werden, ohne dass es zu Biegeverformungen der Schraube kommt. Bei dem Werkzeug kann es sich dabei um Standard-Werkzeug handeln; Spezialwerkzeug wie im Stand der Technik ist bei der erfindungsgemäßen Lösung nicht erforderlich.

Gleichzeitig ist die erfindungsgemäße Schraubverbindung einfach in der Herstellung. Aufgrund ihres Kragens kann die Kragenhülse neben der spielfreien Führung der Schraube auch die Funktion einer Unterlegscheibe, wie sie bei Schraubverbindungen üblich ist, erfüllen. Da durch das Vorsehen einer Kragenhülse also eine Unterlegscheibe entfallen kann, erhöht sich die Anzahl der für das Herstellen einer Schraubverbindung erforderlichen Bauteile gegenüber einer üblichen Schraubverbindung bei der erfindungsgemäßen Lösung nicht.

Auch ändert sich das Verfahren zur Herstellung einer Schraubverbindung nach der erfindungsgemäßen Lösung gegenüber üblichen Schraubverbindungen praktisch nicht. Es muss lediglich anstelle einer Unterlegscheibe eine Kragenhülse vorgesehen werden. Dabei kann die Kragenhülse zuerst in die Durchgangsbohrung eines Bauteils eingeführt werden, bevor die Schraube durch die Kragenhülse geführt wird. Es ist aber - in Anlehnung an die Verwendung einer Unterlegscheibe - auch möglich, die Kragenhülse zuerst auf die Schraube aufzustecken und beide Teile zusammen in die Durchgangsbohrung einzuführen. Das anschließende Anziehen der Schraubverbindung erfolgt dann mit einem beliebigen aus dem Stand der Technik bekannten Anzugsverfahren, wie bspw. einem drehmomentgesteuerten Anziehen.

Die Herstellung von Kragenhülsen ist ebenfalls kostengünstig möglich.

Die Vorteile der erfindungsgemäßen Schraubverbindung ergeben sich bereits bei einem Anzugsdrehmoment größer als 80% des maximalen Anzugmoments der Schraube. Die erfindungsgemäße Schraubverbindung ist aber besonders geeignet für Schraubverbindungen mit einem Anzugsdrehmoment größer als 90% des maximalen Anzugmoments der Schraube oder für Schraubverbindung, die in den plastischen Bereich angezogen sind.

Zur Vereinfachung des Einführens der Kragenhülse in das Durchgangsloch und/oder der Schraube in die Kragenhülse kann die Kragenhülse am von dem Kragen abgewandten Seite des Hülsenabschnitts eine Einführhilfe zum Einführen der Kragenhülse in das Durchgangsloch und/oder am Kragen einer Einführhilfe zum Einführen der Schraube in die Kragenhülse aufweisen. Die Einführhilfen können dabei vorzugsweise als Fase ausgebildet sein, wobei bspw. eine Fase an der das Einsteckloch für die Schraube umgebenden Kante, eine Fase an der umlaufenden Außenkante an der von dem Kragen abgewandten Seite des Hülsenabschnitts vorgesehen sein kann.

Es ist bevorzugt, wenn die Differenz zwischen dem Innendurchmesser des Durchgangsloches und dem Außendurchmesser des Hülsenabschnitts der Kragenhülse und/oder zwischen dem Innendurchmesser des Hülsenabschnitts der Kragenhülse und dem Außendurchmesser der Schraube weniger als 0,7 mm, vorzugsweise weniger als 0,5 mm, weiter vorzugsweise weniger als 0,2 mm ist. Durch die entsprechenden Differenzen kann die im Wesentlichen spielfreie Führung der Kragenhülse im Durchgangsloch bzw. der Schraube in der Kragenhülse gewährleistet werden.

Vorzugsweise liegt die Wandstärke des Hülsenabschnitts der Kragenhülse zwischen 1 mm und 4 mm, vorzugsweise zwischen 1,5 mm und 3,5 mm, weiter vorzugsweise zwischen 2,0 mm und 3,0 mm. Die Kragenhülse ist vorzugsweise aus Vergütungsstahl, bevorzugt mit einer Zugfestigkeit von $R_m = 1000 \frac{N}{mm^2}$ und/oder einer 0,2%-Dehngrenze von $R_{p=0,2} = 900 \frac{N}{mm^2}$, wobei die Kragenhülse vorzugsweise feuerverzinkt ist.

Zur Erläuterung des erfindungsgemäßen Verfahrens wird auf die vorstehenden Ausführungen verwiesen. Soll die Schraubverbindung in den plastischen Bereich angezogen werden, erfolgt das Anziehen vorzugsweise drehwinkelgesteuert.

Die erfindungsgemäße Schraubverbindung eignet sich besonders als Verbindungselement der beiden Flansche einer Flanschkupplung an der Rotorwelle einer Windenergieanlage, bspw. zwischen Welle und Nabe oder zwischen Welle und Generator. Aufgrund der dort regelmäßig zu übertragenden großen Momente ist eine gleichmäßige Vorspannung sämtlicher Schraubverbindungen der Flanschkupplung vorteilhaft, um eine möglichst gleichmäßige Belastung der Schraubverbindungen zu erreichen. Gelingt dies nicht, besteht die Gefahr, dass wenigstens eine der Schraubverbindungen übermäßig belastet wird und versagt. Es ist bevorzugt, wenn sämtliche Verbindungselemente der Flanschkupplung erfindungsgemäße Schraubverbindungen sind. Die Schraubverbindung(en) ist bzw. sind vorzugsweise in den plastischen Bereich angezogen.

Die Erfindung wird nun anhand von vorteilhaften Ausführungsformen unter Bezugnahme auf die beigefügten Zeichnungen beispielhaft beschrieben. Es zeigen:

Figur 1: eine Detaildarstellung eines ersten Ausführungsbeispiels einer erfindungsgemäßen Schraubverbindung;

Figur 2: eine Detaildarstellung eines zweiten Ausführungsbeispiels einer erfindungsgemäßen Schraubverbindung;

Figur 3: eine Kragenhülse gemäß der Ausführungsbeispiele aus Figuren 1 und 2; und

Figur 4: die Verwendung der Schraubverbindung gemäß Figur 1 an der Flanschkupplung der Rotorwelle einer Windenergieanlage.

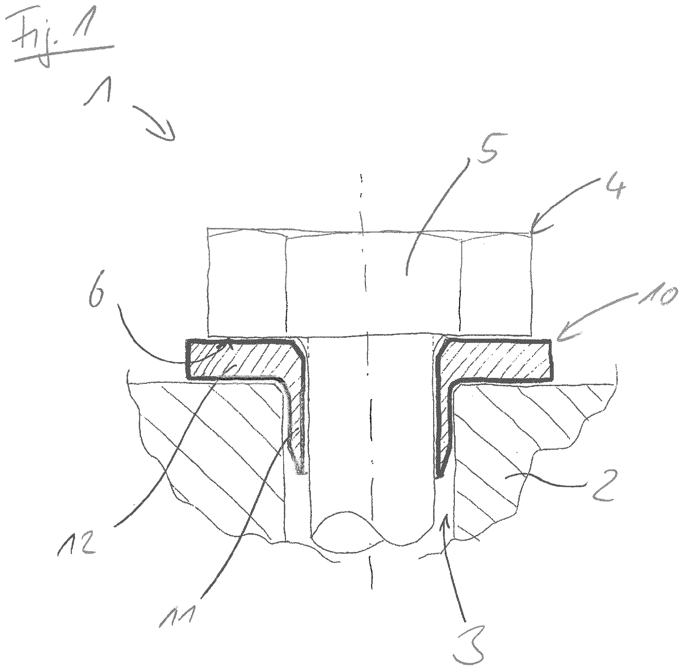

In Figur 1 ist ein erstes Ausführungsbeispiel einer erfindungsgemäßen Schraubverbindung 1 dargestellt, wobei sich die Darstellung auf die für die Erfindung wesentlichen Teil der Schraubverbindung beschränkt. Durch die Schraubverbindung 1 wird ein erstes Bauteil 2 mit einem zweiten (nicht dargestellten) Bauteil verbunden. Das erste Bauteil 2 weist dazu ein Durchgangsloch 3 auf, durch das eine Schraube 4 mit Kopf 5 geführt ist. Die Schraube 4 greift entweder in ein unmittelbar am zweiten Bauteil vorgesehenes Innengewinde ein oder wird auch durch das zweite Bauteil hindurchgeführt und mit einer Mutter gesichert (Durchsteck-Schraubverbindung). Die Schraubverbindung 1 ist in den plastischen Bereich angezogen.

Zur Vermeidung von Biegebeanspruchungen während des Anziehens der Schraubverbindung 1 ist eine Kragenhülse 10 vorgesehen. Die Kragenhülse 10 umfasst dabei einen Hülsenabschnitt 11 und einen daran angeordneten Kragen 12. Der Kragen 12 ist zwischen dem Anschlag 6 am Kopf 5 der Schraube 4 und dem ersten Bauteil 2 angeordnet und wirkt somit vergleichbar wie eine Unterlegscheibe.

Der Hülsenabschnitt 11 ist derart ausgebildet, dass die Kragenhülse 10 im Wesentlichen ohne Spiel sowohl gegenüber dem Durchgangsloch 3 als auch gegenüber dem Schaft der Schraube 4 ist. Dazu ist der Außendurchmesser des Hülsenabschnitts 11 der Kraghülse 10 nur um 0,2 mm geringer als der Innendurchmesser des Durchgangslochs 3 im Bauteil 2, während der Innendurchmesser des Hülsenabschnitts 11 um 0,1 mm größer ist als der Durchmesser der Schraube 4. Die Wandstärke des Hülsenabschnitts 11 beträgt 2 mm.

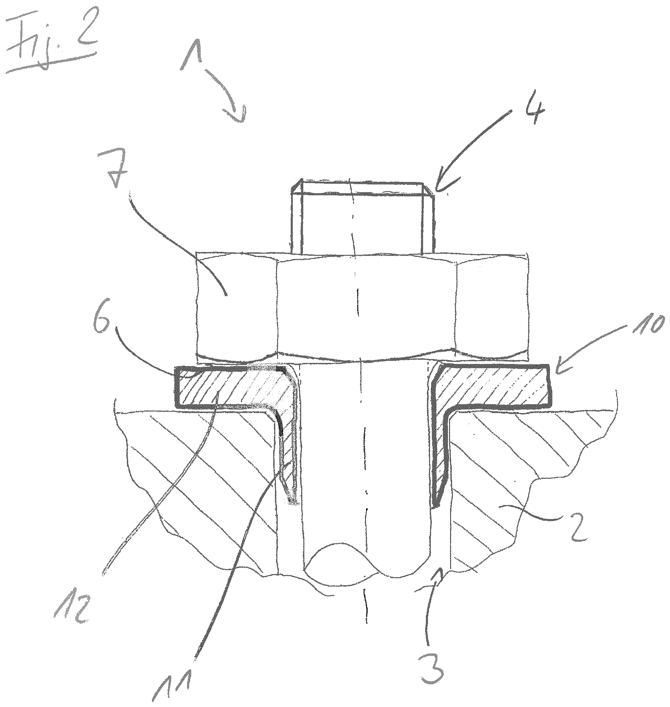

In Figur 2 ist ein zweites Ausführungsbeispiel einer erfindungsgemäßen Schraubverbindung 1 dargestellt, wobei dieses Ausführungsbeispiel in weiten Teilen dem Ausführungsbeispiel gemäß Figur 1 gleicht, weshalb auf die dortigen Ausführungen verwiesen wird.

Im Unterschied zu dem Ausführungsbeispiel gemäß Figur 1, weist die Schraube 4 am dargestellten Ende der Schraubverbindung 1 keinen Kopf auf. Vielmehr ist eine Mutter 7 vorgesehen, die den Anschlag 6 bildet.

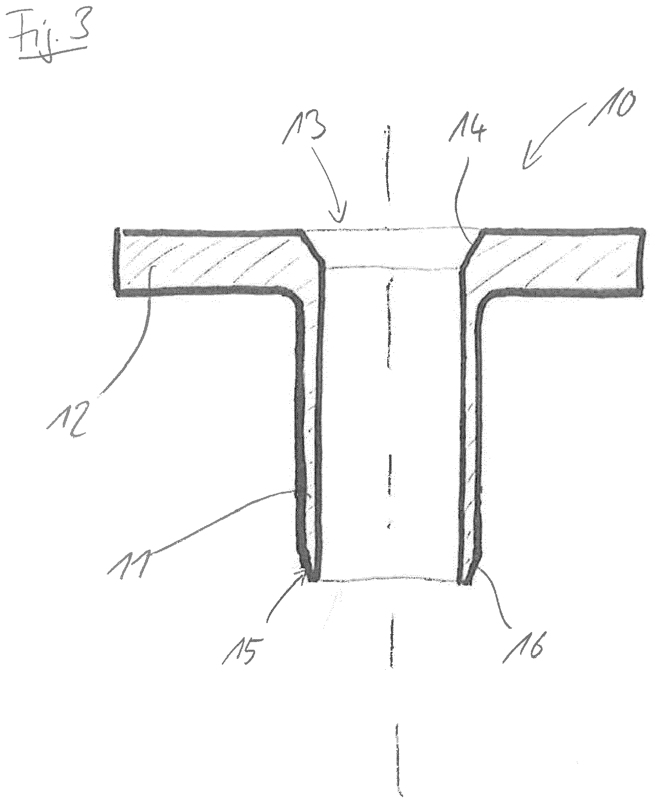

In Figur 3 ist die Kragenhülse 10, wie sie bei den Ausführungsbeispielen aus Figuren 1 und 2 verwendet wird, dargestellt.

Die Kragenhülse 10 weist an ihrer Öffnung 13 im Bereich des Kragens 12 eine Fase 14 auf, die als Einführhilfe das Einführen einer Schraube in die Kragenhülse 10 erleichtert. An ihrem anderen Ende weist die Kragenhülse 10 an der Außenkante 15 des Hülsenabschnitts 11 eine weitere Fase 16 auf. Die Fase 16 erleichtert das Einführen der Kragenhülse 10 in ein Durchgangsloch 3 in einem Bauteil 2 (vgl. Figuren 1 und 2).

Die Kragenhülse 10 ist aus Vergütungsstahl und feuerverzinkt. Sie weist eine Zugfestigkeit von

$$R_m = 1000 \, \frac{N}{mm^2}$$ und eine 0,2%-Dehngrenze von

$$R_{p=0,2} = 900 \, \frac{N}{mm^2}$$ auf.

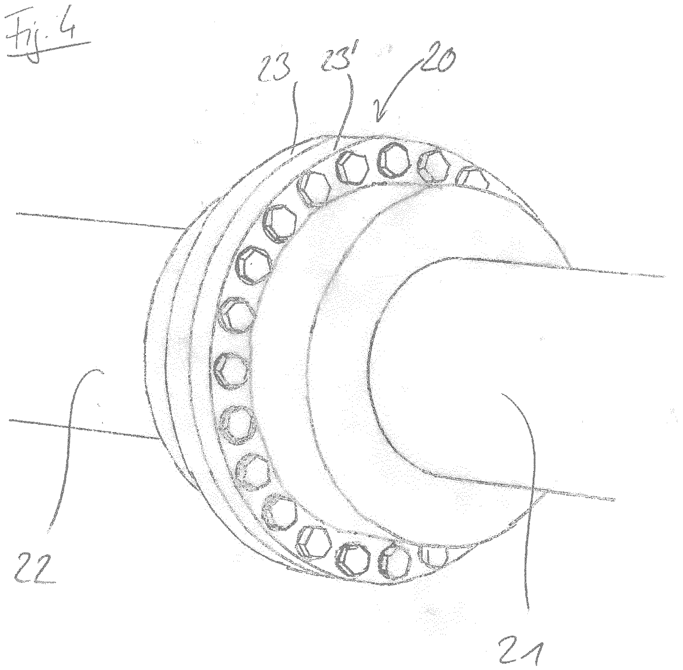

In Figur 4 ist schematisch die Verwendung der Schraubverbindung gemäß Figur 1 als Verbindungselement für die Flanschkupplung 20 der Rotorwelle 21 einer Windenergieanlage (nicht näher dargestellt), über die die Rotorwelle 21 mit der Generatorwelle 22 verbunden ist, dargestellt. Die beiden Flansche 23, 23' der Flanschkupplung 20 sind über eine Vielzahl von Schraubverbindungen 1 verbunden, die sämtlich gemäß Figur 1 ausgebildet sind, insbesondere also jeweils eine Kragenhülse 10 aufweisen.

Indem sämtliche Schraubverbindungen 1 der Flanschkupplung 20 über ein drehwinkelgesteuertes Anziehen in den plastischen Bereich angezogen sind, wird sichergestellt, dass die Schraubverbindungen jeweils vergleichbar vorgespannt sind und keine Schraubverbindung 1 im Vergleich zu den jeweils übrigen Schraubverbindungen 1 überbeansprucht wird. Gleichzeitig werden durch die erfindungsgemäß vorgesehenen Kragenhülsen 10 Überbeanspruchungen der Schraubverbindungen 1 während des Anziehens aufgrund von Biegebeanspruchungen vermieden.

**Patentansprüche**

1. Schraubverbindung (1) mit einer durch ein Durchgangsloch (3) eines Bauteils (2) hindurchgeführten Schraube (4), wobei die Schraubverbindung (1) mit einem das Anzugsdrehmoment größer als 80% des maximalen Anzugmoments der Schraube (4) hergestellt ist,
**dadurch gekennzeichnet, dass**
eine Kragenhülse (10) derart in das Durchgangsloch (3) eingeführt ist, dass der Kragen (11) der Kragenhülse (10) zwischen dem an dem Bauteil (2) angreifenden Anschlag (6) der Schraubverbindung (1) und dem Bauteil (2) angeordnet ist und der Hülsenabschnitt (12) der Kragenhülse (10) im Wesentlichen ohne Spiel sowohl gegenüber dem Durchgangsloch (3) als auch gegenüber dem durch den Hülsenbereich (12) geführten Schaft der Schraube (4) ist.

2. Schraubverbindung nach Anspruch 1,
**dadurch gekennzeichnet, dass**
das Anzugsdrehmoment größer als 90% des maximalen Anzugmoments der Schraube (4) ist oder dass die Schraubverbindung (1) in den plastischen Bereich angezogen ist.

3. Schraubverbindung nach einem der vorhergehenden Ansprüche, **dadurch gekennzeichnet, dass** die Kragenhülse (10) am von dem Kragen (12) abgewandten Seite des Hülsenabschnitts (11) eine Einführhilfe zum Einführen der Kragenhülse (10) in das Durchgangsloch (3) und/oder am Kragen (12) eine Einführhilfe zum Einführen der Schraube (4) in die Kragenhülse (10) aufweist, wobei die Einführhilfen vorzugsweise als Fasen (14, 16) ausgebildet sind.

4. Schraubverbindung nach einem der vorhergehenden Ansprüche, **dadurch gekennzeichnet, dass** die Differenz zwischen dem Innendurchmesser des Durchgangsloches (3) und dem Außendurchmesser des Hülsenabschnitts (11) der Kragenhülse (10) und/oder zwischen dem Innendurchmesser des Hülsenabschnitts (11) der Kragenhülse (10) und dem Außendurchmesser der Schraube (4) weniger als 0,7 mm, vorzugsweise weniger als 0,5 mm, weiter vorzugsweise weniger als 0,2 mm ist.

5. Schraubverbindung nach einem der vorhergehenden Ansprüche, **dadurch gekennzeichnet, dass** die Wandstärke des Hülsenabschnitts (11) der Kragenhülse (10) zwischen 1 mm und 4 mm, vorzugsweise zwischen 1,5 mm und 3,5 mm, weiter vorzugsweise zwischen 2,0 mm und 3,0 mm liegt.

6. Schraubverbindung nach einem der vorhergehenden Ansprüche, **dadurch gekennzeichnet, dass** Kragenhülse (10) aus Vergütungsstahl ist, vorzugsweise mit einer Zugfestigkeit von $R_m = 1000\frac{N}{mm^2}$ und/oder einer 0,2%-Dehngrenze von $R_{p=0,2} = 900\frac{N}{mm^2}$ ist, wobei die Kragenhülse (10) vorzugsweise feuerverzinkt ist.

7. Verfahren zum Herstellen einer Schraubverbindung gemäß einem der Ansprüche 1 bis 6, umfassend die Schritte:

   a. Einführen der Kragenhülse (10) in die Durchgangsbohrung (3) eines Bauteils (2);
   b. Durchführen der Schraube (4) durch die Kragenhülse (10); und
   c. Anziehen der Schraubverbindung (1) mit einem Anzugdrehmoment von wenigstens 80% des maximalen Anzugmoments der Schraube (4).

8. Verfahren nach Anspruch 7,
**dadurch gekennzeichnet, dass**
das Anziehen mit einem Anzugsdrehmoment größer als 90% des maximalen Anzugmoments der Schraube (4) erfolgt oder dass die Schraubverbindung (1) in den plastischen Bereich angezogen wird.

9. Verfahren nach Anspruch 8,
**dadurch gekennzeichnet, dass**
das Anziehen der Schraubverbindung drehwinkelgesteuert erfolgt.

10. Flanschkupplung (20) der Rotorwelle (21) einer Windenergieanlage,
**dadurch gekennzeichnet, dass**
wenigstens ein Verbindungselement der beiden Flansche (23, 23') der Flanschkupplung (20) eine Schraubverbindung (1) nach einem der Ansprüche 1 bis 6 ist.

11. Flanschkupplung nach Anspruch 10,
**dadurch gekennzeichnet, dass**
sämtliche Verbindungselemente der Flanschkupplung (20) Schraubverbindungen (1) nach einem der Ansprüche 1 bis 6 sind.

12. Flanschkupplung nach Anspruch 10 oder 11,
**dadurch gekennzeichnet, dass**
die Schraubverbindung(en) (1) in den plastischen Bereich angezogen ist bzw. sind.

Fig. 1

Fig. 2

Fig. 3

EP 3 239 548 A1

Fig. 4

23   23'   20

22

21

9

**Europäisches Patentamt**
**European Patent Office**
**Office européen des brevets**

# EUROPÄISCHER RECHERCHENBERICHT

Nummer der Anmeldung

EP 17 16 6736

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2015 094394 A (MITSUBISHI HITACHI POWER SYS) 18. Mai 2015 (2015-05-18) | 1-12 | INV. F16D1/033 |
| Y | * Abbildung 7 * | 10-12 | |
| | ----- | | ADD. F16B19/02 |
| X | US 2013/202440 A1 (IVAKITCH RICHARD [CA] ET AL) 8. August 2013 (2013-08-08) | 1-12 | |
| Y | * Abbildung 2 * | 10-12 | |
| | ----- | | |
| X | US 3 835 525 A (KING J) 17. September 1974 (1974-09-17) | 1-9 | |
| Y | * Abbildung 4 * | 10-12 | |
| | ----- | | |
| X | EP 1 103 730 A2 (BALCKE DUERR ENERGIETECH GMBH [DE]) 30. Mai 2001 (2001-05-30) * Abbildung 5 * | 1-9 | |
| | ----- | | |
| X | US 4 244 661 A (DERVY ARAM J) 13. Januar 1981 (1981-01-13) * Abbildungen 1,2 * | 1-9 | |
| | ----- | | RECHERCHIERTE SACHGEBIETE (IPC) |
| X | DE 10 2014 203276 A1 (BAYERISCHE MOTOREN WERKE AG [DE]) 27. August 2015 (2015-08-27) * Abbildung 1 * | 1-9 | F16D F16B |
| | ----- | | |

Der vorliegende Recherchenbericht wurde für alle Patentansprüche erstellt

| Recherchenort | Abschlußdatum der Recherche | Prüfer |
|---|---|---|
| München | 12. September 2017 | Pecquet, Gabriel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 6736

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2017

| Im Recherchenbericht angeführtes Patentdokument | Datum der Veröffentlichung | Mitglied(er) der Patentfamilie | Datum der Veröffentlichung |
|---|---|---|---|
| JP 2015094394 A | 18-05-2015 | KEINE | |
| US 2013202440 A1 | 08-08-2013 | CA 2803711 A1<br>US 2013202440 A1 | 02-08-2013<br>08-08-2013 |
| US 3835525 A | 17-09-1974 | KEINE | |
| EP 1103730 A2 | 30-05-2001 | DE 29920683 U1<br>EP 1103730 A2 | 17-02-2000<br>30-05-2001 |
| US 4244661 A | 13-01-1981 | KEINE | |
| DE 102014203276 A1 | 27-08-2015 | KEINE | |

EPO FORM P0461

Für nähere Einzelheiten zu diesem Anhang : siehe Amtsblatt des Europäischen Patentamts, Nr.12/82